# FASCICULE DE BREVET EUROPEEN

(11) **EP 1 391 027 B1**
(45) Date de publication et mention de la délivrance du brevet: **04.05.2011**
(21) Numéro de dépôt: 02738286.0
(22) Date de dépôt: 29.05.2002
(51) Int. Cl.: H02K 15/12, H02K 3/52, H02K 1/24

(54) **PROCEDE DE FABRICATION D'UN ROTOR DE MACHINE ELECTRIQUE TOURNANTE**
HERSTELLUNGSVERFAHREN EINES LÄUFERS EINER DREHENDEN ELEKTRISCHEN MASCHINE
MANUFACTURING METHOD OF A ROTOR OF A ROTARY ELECTRIC MACHINE

(30) Priorité: 31.05.2001 FR 0107178
(43) Date de publication de la demande: 25.02.2004
(73) Titulaire: VALEO EQUIPEMENTS ELECTRIQUES MOTEUR, 94000 Créteil (FR)
(72) Inventeur: LAXENAIRE, Arnaud, F-62520 Le Touquet (FR); TROMEUR, Guillaume, F-75017 Paris (FR)
(74) Mandataire: Gamonal, Didier
(86) Numéro de dépôt international: PCT/FR2002/001803
(87) Numéro de publication internationale: WO 2002/097953

(56) Documents cités:
- EP-A- 1 079 504
- DE-A- 3 842 563
- FR-A- 2 809 546
- FR-A1- 2 825 534
- US-A- 1 751 971
- PATENT ABSTRACTS OF JAPAN vol. 004, no. 141 (E-028), 4 octobre 1980 (1980-10-04) -& JP 55 092552 A (SHIBAURA ENG WORKS CO LTD), 14 juillet 1980 (1980-07-14)

## Description

### Domaine de l'intention

L'invention propose un procédé de fabrication d'un rotor pour une machine électrique tournante.

### Etat de la technique

De façon connue, les machines électriques tournantes comportent un rotor et un stator sur chacun desquels peut être réalisé un bobinage électrique.

La machine électrique tournante peut être un alternateur qui permet de transformer un mouvement de rotation du rotor en un courant électrique, comme décrit par exemple dans le document WO01/93406.

La machine électrique peut aussi être un moteur qui permet de transformer un courant électrique qui traverse un bobinage du rotor en un mouvement de rotation du rotor. La machine peut être réversible et donc transformer l'énergie mécanique en énergie électrique et vice versa comme décrit par exemple dans le document WO01/69762.

L'alternateur permet donc dans ce cas de démarrer le moteur du véhicule automobile.

Chaque bobinage électrique consiste en un enroulement d'au moins un élément conducteur électrique qui est revêtu d'une couche en matériau isolant électrique. En section transversale, un bobinage est donc constitué d'une juxtaposition horizontale et verticale de tronçons de l'élément conducteur électrique qui sont liés entre eux par un vernis.

Dans le document DE 38 42 563 le bobinage électrique est monté dans des encoches d'un paquet de tôles et, pour par example supprimer les isolants des encoches, on recouvre les conducteurs isolés du bobinage d'une laque isolante fusible pour remplir les encoches et immobiliser les conducteurs dans les encoches.

Dans le document EP 1079 504 on plonge le bobinage dans une solution contenant des particules conductrices de chaleur, puis, après séchage, on ajoute un isolant et le noyau, puis on plonge le bobinage dans de la résine que l'on chauffe par la suite pour le durcir.

Le bobinage du rotor d'une machine électrique tournante est généralement réalisé dans un corps de bobine, en matière plastique isolante électrique, consistant en un élément annulaire dont une demi-section axiale à la forme d'un U.

Le corps de bobine permet de guider l'élément conducteur électrique lors de son enroulement. Cependant il est fréquent que les ailes transversales du corps de bobine s'écartent légèrement l'une de l'autre, provoquant ainsi un mauvais bobinage. L'élément conducteur électrique peut se prendre dans les ailes transversales surélevées de pétales. Lors du transport avant l'imprégnation de vernis, il peut aussi se produire un affaissement partiel radial de certains tronçons de l'élément conducteur électrique du bobinage qui écarte les flancs du corps de bobine et provoque son élargissement. Ainsi lorsque l'on vient intercaler le bobinage réalisé entre les deux roues polaires, l'élargissement est compacté ce qui risque de détruire la couche isolante électrique, notamment celle des brins axiaux du conducteur, et ainsi créer des contacts entre eux qui provoquent une perte de résistance. De plus, l'élargissement radial peut empêcher le contact entre le noyau sur lequel sont montés le bobinage et les deux roues polaires, ce qui crée un entrefer parasite du noyau par rapport aux roues polaires, et par conséquent une perte de puissance et de rendement de la machine électrique tournante.

Du vernis est ensuite déposé sur le bobinage puis est durci en figeant ainsi les défauts du bobinage.

Le durcissement du vernis peut être obtenu par chauffage du bobinage dans une étuve. Cette étape est par conséquent très longue.

De plus, le corps de bobine, généralement en plastique, forme un écran thermique entre le bobinage, le noyau, et les roues polaires, ce qui gène le transfert et la dissipation de la chaleur produite par le passage du courant dans l'élément conducteur électrique, lors du fonctionnement de la machine électrique tournante, et diminue le rendement de la machine électrique tournante.

De façon à limiter ces problèmes, conformément à la demande de brevet français No. 00.06853 du 29 mai 2000 publié 30 novembre 2001 sous le numéro FR-A-2 809 546 et non compris dans l'état de la technique une autre solution consiste à utiliser un élément conducteur électrique qui est revêtu d'au moins une couche en matériau isolant électrique et qui est enrobé d'une couche de liaison qui comporte un matériau de liaison qui permet de lier entre eux des tronçons adjacents de l'élément conducteur électrique enrobé.

Le matériau de liaison peut également lier le bobinage et le noyau.

Il est ainsi possible de supprimer le corps de bobine de façon à favoriser le transfert et la dissipation de la chaleur produite dans l'enroulement lors du fonctionnement du rotor.

Pour ce faire, lors de l'étape d'enroulement, l'élément conducteur électrique revêtu et enrobé peut être guidé transversalement par deux flasques transversaux qui déterminent la largeur du bobinage. Les deux flasques transversaux permettent le maintien de l'élément conducteur électrique revêtu et enrobé.

Ensuite, le procédé de fabrication d'un tel enroulement comporte une étape de changement d'état du matériau de liaison qui consiste à provoquer son ramollissement ou sa fusion pour qu'il remplisse au moins partiellement les interstices existants entre les tronçons adjacents de l'élément conducteur puis qui provoque à nouveau sa solidification et lie entre eux les tronçons adjacents de l'élément conducteur.

L'étape de changement d'état peut alors comporter une étape de chauffage du matériau de liaison. Celle-ci peut être réalisée dans une étuve. Cependant, il est avantageux de provoquer le ramollissement ou la fusion du matériau de liaison par chauffage de l'élément conducteur par effet Joule. Pour ce faire, il est nécessaire de faire circuler un courant d'une intensité suffisante dans l'élément conducteur de façon à provoquer son échauffement.

Cependant, le noyau du rotor qui consiste en une pièce massive qui est de préférence en acier magnétique et qui a tendance à absorber la chaleur produite par effet Joule dans le bobinage.

Le transfert et la dispersion de la chaleur du bobinage vers le noyau du rotor provoque un gradient de température dans le bobinage.

En effet, une partie de la chaleur produite par les spires intérieures de l'enroulement, c'est à dire celles situées au contact ou à proximité du noyau, est absorbée par le noyau ce qui limite l'augmentation de leurs températures.

De ce fait, à la fin de l'étape de chauffage, la température atteinte par le matériau de liaison qui enrobe les spires intérieures de l'élément conducteur est inférieure à celle atteinte par le matériau de liaison des autres spires. La différence entre ces deux températures peut atteindre plusieurs dizaines de degrés Celsius.

Étant donné que la température de l'élément conducteur doit rester inférieure à une température maximale, de façon à ne pas endommager la couche de matériau isolant électrique, la température atteinte par le matériau de liaison qui enrobe les spires intérieures de l'élément conducteur est généralement inférieure à la température de ramollissement ou de fusion du matériau de liaison.

Par conséquent, le matériau de liaison ne peut lier entre eux les tronçons adjacents des spires intérieures de l'élément conducteur.

Cela est préjudiciable aux performances de la machine électrique tournante.

Par exemple, lors du fonctionnement de la machine électrique tournante, les spires inférieures du bobinage peuvent vibrer ce qui provoque du bruit. Le découplage du bobinage par rapport au noyau peut aussi provoquer du bruit.

Les vibrations des spires intérieures les unes sur les autres favorisent l'usure de la couche en matériau isolant, ce qui augmente le risque de courts-circuits.

De plus, un tel procédé ne permet pas d'utiliser des roues polaires à demi noyau, c'est à dire des roues polaires qui sont réalisées en une seule pièce avec une partie du noyau. En effet, les griffes s'étendent axialement au dessus des demi noyaux des roues polaires et, par conséquent, empêchent le bobinage de l'élément conducteur sur le noyau.

### Objet de l'invention

Dans le but de remédier à ces inconvénients, l'invention propose un procédé de fabrication d'un rotor de machine électrique tournante selon la revendication 1.

Grâce à l'invention, on peut utiliser des roues polaires à demi noyau. Ces roues polaires sont robustes en sorte qu'il est possible d'interposer des aimants entre les griffes des roues polaires comme décrit par exemple dans le document FR-A-2 793 085.

Il est ainsi possible d'augmenter la puissance de la machine électrique tournante grâce à la présence des aimants permanents.

On notera en outre que l'on obtient une meilleure dissipation thermique entre le bobinage électrique inducteur et les roues polaires du rotor.

En outre l'élément tubulaire du noyau participe à l'obtention d'un bon flux magnétique lorsque le bobinage électrique est activé pour obtention de pôles Nord et Sud au niveau des griffes.

L'élément tubulaire permet de réduire l'épaisseur des demi-noyaux des roues polaires, bien entendu dans les limites définies par une bonne tenue à la centrifugation des roues polaires.

L'obtention par forgeage des roues polaires est facilitée, celles-ci étant plus homogènes.

On obtient une bonne tenue de l'élément tubulaire du noyau aux acyclismes engendrés par le moteur thermique du véhicule.

Grâce à l'invention on peut augmenter le diamètre externe des roues polaires puisque celles-ci sont plus robustes du fait de la présence de demi noyaux en sorte que la puissance de la machine peut être augmentée et la bruit magnétique diminué.

De plus il y a de faibles gradients de température entre l'élément tubulaire de noyau et le bobinage du fait que l'élément tubulaire est de faible épaisseur par rapport à un noyau classique.

Selon d'autres caractéristiques de l'invention :
- l'assemblage de l'élément tubulaire et du corps de noyau est réalisé par frettage ;
- l'assemblage de l'élément tubulaire et du corps du noyau est réalisé par collage ;
- le noyau comporte un élément tubulaire externe sur la paroi cylindrique convexe duquel est réalisé le bobinage ;
- la paroi cylindrique interne de l'élément tubulaire comporte au moins une forme en creux ou en saillie qui coopère avec une forme en saillie ou en creux complémentaire du corps de noyau de façon à bloquer la rotation de l'élément tubulaire par rapport au corps de noyau ;
- l'élément tubulaire consiste en une feuille métallique roulée en tube et soudée ;
- le corps de noyau est formé en deux parties sensiblement cylindriques qui s'étendent axialement l'une vers l'autre, chacune depuis une face transversale d'une roue polaire du rotor ;
- l'élément tubulaire comporte de l'acier ;
- l'élément tubulaire comporte de l'aluminium ;
- au moins une face de l'élément tubulaire est anodisée ;
- un élément isolant électrique est interposé axialement entre le bobinage et la paroi cylindrique convexe externe de l'élément tubulaire du noyau et assure la tenue mécanique du bobinage et de l'élément tubulaire ;
- le matériau de liaison de la couche externe de liaison est un polymère du type thermodurcissable ;
- le matériau de liaison de la couche externe de liaison est un polymère du type thermoplastique.

### Brève description des dessins

D'autres caractéristiques et avantages de l'invention apparaîtront à la lecture de la description détaillée qui suit pour la compréhension de laquelle on se reportera aux dessins annexés dans lesquels :
- la figure 1 représente de façon schématique en section partielle une machine électrique tournante dont le bobinage du rotor est réalisé avec un fil revêtu d'une couche en matériau isolant et enrobé d'un matériau de liaison ;
- la figure 2 représente à grande échelle le détail D2 de la figure 1, avant l'étape de changement d'état du matériau de liaison ;
- la figure 3 est une vue similaire à celle représentée à la figure 2 après l'étape de changement d'état du matériau de liaison selon l'état de la technique ;
- la figure 4 est une vue en coupe axiale partielle du bobinage réalisé selon l'invention ;
- les figures 5 à 8 sont des vues en coupe transversale du bobinage réalisé selon des variantes d'un premier mode de réalisation de l'invention ;
- la figure 9 est une vue en perspective éclatée d'un rotor réalisé selon un second mode de réalisation de l'invention ;
- la figure 10 est une vue en coupe axiale partielle du rotor dont le bobinage est réalisé selon le second mode de réalisation de l'invention ;
- les figures 11 à 14 sont des vues en coupe axiale partielle du rotor dont le bobinage est réalisé selon des variantes de l'invention.

### Description de modes de réalisation préférentiels de l'invention

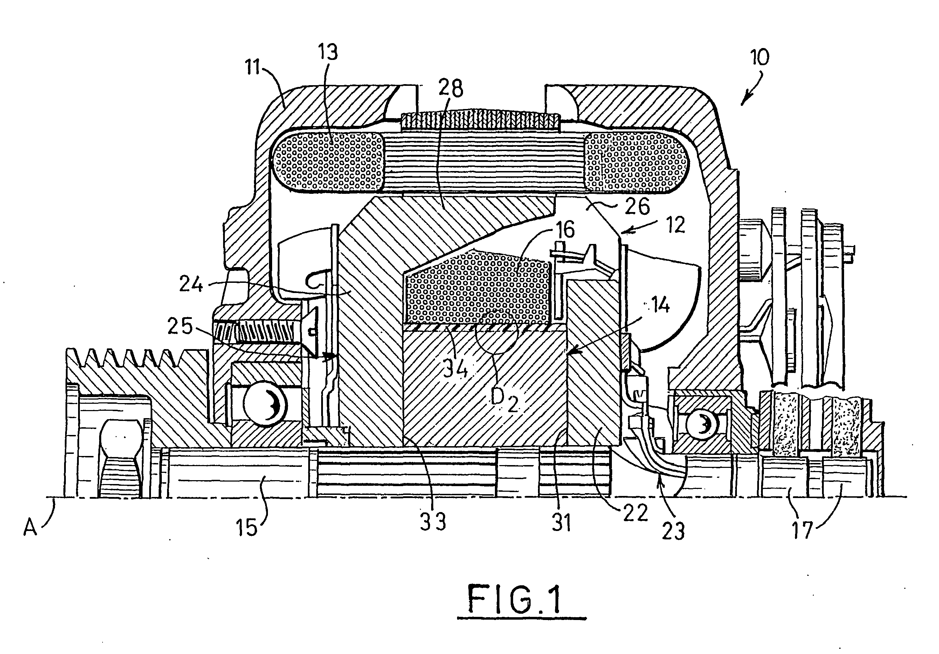

On a représenté à la figure 1, de façon schématique, un alternateur 10 constitué principalement d'un carter 11 en deux parties portant intérieurement deux organes principaux qui sont un rotor 12 et un stator 13.

Le stator 13 entoure le rotor 12 qui est solidaire d'un arbre 15 de sortie d'axe de rotation A, sur l'extrémité arrière duquel deux bagues collectrices 17 sont fixées.

Le rotor 12 est principalement composé d'un noyau 14 sur lequel est réalisé un bobinage électrique 16.

Le bobinage électrique 16 est par exemple constitué par l'enroulement en spires d'un élément conducteur électrique, tel qu'un fil de cuivre, qui est revêtu d'au moins une couche en matériau isolant électrique.

Le rotor 12 est ici un rotor à griffes qui est constitué par le bobinage électrique 16 cylindrique qui est monté entre deux plateaux 22 et 24 comportant chacun des griffes 26 et 28 respectivement, qui s'étendent axialement en direction de l'autre plateau 24 et 22. Les griffes 26 et 28 sont décalées angulairement l'une par rapport à l'autre de façon qu'une griffe 26 du plateau 22 s'intercale entre deux griffes 28 adjacentes du plateau 24, et inversement. Pour plus de précisions, on se reportera au document EP-B-0.515.259 ou au document WO01/9340 montrant également le rotor d'une machine électrique tournante et plus particulièrement un alternateur.

Les plateaux 22, 24 ainsi que leurs griffes 26, 28 respectives sont ici appelée roues polaires 23 et 25.

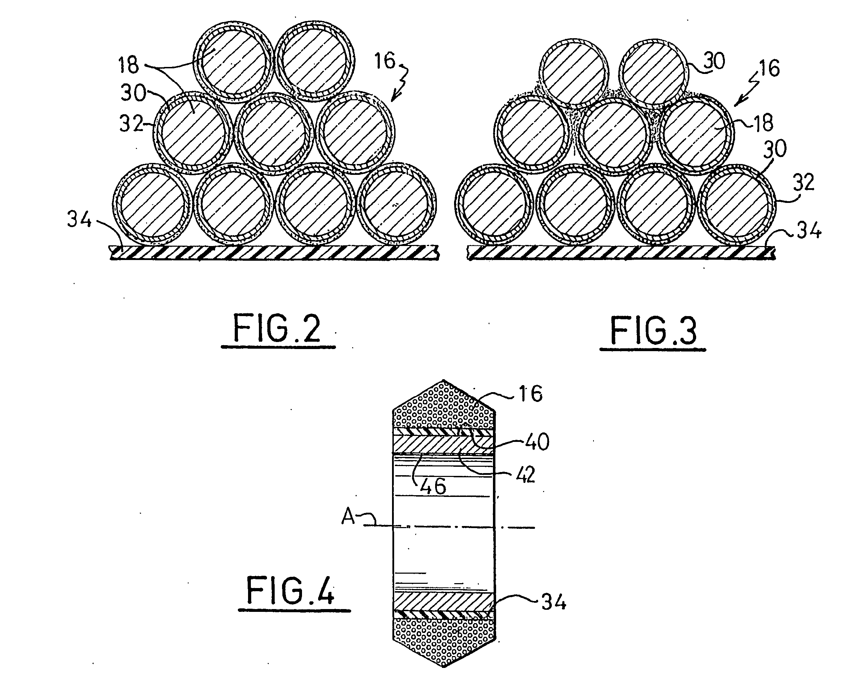

La figure 2 représente à grande échelle, selon une section transversale, une partie de l'enroulement de l'élément conducteur 18 revêtu d'une couche 30 de matériau isolant électrique.

L'élément conducteur 18 revêtu est aussi enrobé d'une couche de liaison 32 en matériau de liaison qui permet de lier entre eux des tronçons adjacents de l'élément conducteur 18.

De façon connue, conformément à la figure 2, une feuille 34 isolante électrique est interposée entre le bobinage électrique 16 et le noyau 14. Elle permet de diminuer ou de supprimer les risques de courts-circuits entre le bobinage 16 et le noyau 14.

Le matériau de la feuille 34 isolante électrique peut aussi être conducteur thermique. Cela permet, lors du fonctionnement de la machine électrique tournante, de favoriser l'évacuation, vers le noyau 14, de la chaleur produite par la circulation du courant électrique dans l'élément conducteur 18.

La feuille 34 isolante peut aussi s'étendre sur les parois transversales du bobinage 16 de façon à supprimer les risques de courts-circuits entre le bobinage 16 et les roues polaires, non représentées, de la machine électrique tournante.

La feuille isolante 34 peut comporter un élément de structure isolant électrique, tel que du papier ou du tissu isolant, dont au moins une des faces est au moins partiellement enduite d'un matériau de liaison.

Avantageusement, le matériau de liaison de la feuille isolante est compatible chimiquement avec le matériau de liaison de la couche 32.

Lors de la fabrication du rotor 12, la liaison des tronçons adjacents de l'élément conducteur 18 est avantageusement obtenue par une étape de changement d'état du matériau de la couche de liaison 32.

L'étape de changement d'état provoque le ramollissement ou la fusion du matériau de liaison pour qu'il remplisse au moins partiellement les interstices existants entre les tronçons adjacents de l'élément conducteur 18 puis provoque à nouveau sa solidification et lie entre eux les tronçons adjacents de l'élément conducteur 18.

L'étape de changement d'état correspond à une modification de la structure du matériau de liaison, c'est-à-dire un mouvement de certains des atomes le constituant les uns par rapport aux autres.

L'étape de changement d'état du matériau comporte une étape de chauffage de la couche de liaison à une température de durcissement qui est supérieure ou égale à la température de fusion du matériau de liaison, de façon à le faire fondre ou ramollir pour qu'il coule ou flue de façon à remplir de préférence quasi entièrement les interstices existants entre les tronçons adjacents de l'élément conducteur 18.

L'étape de chauffage est suivie d'une étape de refroidissement au cours de laquelle le matériau de liaison se durcit ou se solidifie à nouveau.

La température de durcissement ou de solidification du matériau de liaison est la température à partir de laquelle la structure du matériau est modifiée de façon que le matériau permette la liaison des éléments avec lesquels il est au moins partiellement en contact.

Le matériau de liaison est avantageusement un polymère.

Ainsi, lorsque le polymère est de type thermodurcissable, on appellera dans la suite de la description ainsi que dans les revendications, que sa température de durcissement dépend de sa température de réticulation.

Ainsi, lorsque le polymère est de type thermoplastique, on appellera dans la suite de la description ainsi que dans les revendications, que sa température de durcissement est inférieure à sa température de fusion.

Lorsque le matériau de liaison est un polymère, l'étape de chauffage permet sa polymérisation et l'étape de refroidissement permet sa solidification ce qui assure la liaison rigide des tronçons adjacents de l'élément conducteur 18 revêtu.

Lorsque la feuille isolante 34 est enduite d'un matériau de liaison tel qu'un polymère, les étapes de chauffage à une température supérieure ou égale à la température de durcissement du matériau de liaison et de refroidissement permettent de la lier au noyau 14 du rotor 12 et de renforcer sa liaison avec les tronçons adjacents de l'élément conducteur 18 revêtu.

L'étape de chauffage consiste à échauffer l'élément conducteur électrique 18 revêtu et enrobé par effet Joule de façon à porter la température du matériau de liaison à une température supérieure ou égale à sa température de durcissement.

Cependant, la feuille isolante 34 permet le transfert de la chaleur produite par effet Joule du bobinage vers le noyau 14. Ce transfert thermique provoque un gradient de température à l'intérieur du bobinage 16. Les spires intérieures de l'enroulement du bobinage 16 qui sont situées à proximité du noyau 14 sont à une température inférieure à la température des autres spires de l'enroulement du bobinage 16.

Etant donné qu'une quantité de chaleur importante est transférée des spires intérieures vers le noyau 14, la température de ces spires n'augmente pas suffisamment pour permettre la polymérisation du matériau de liaison, empêchant ainsi la liaison entre les tronçons adjacents des spires intérieures de l'élément conducteur 18.

Par exemple lorsque la température des spires extérieures est de l'ordre de 240°C, c'est à dire supérieure à la température de durcissement qui est de l'ordre de 200°C, la température des spires intérieures est de l'ordre de 130°C, la température du noyau 14 ayant augmenté de quelques dizaines de degrés.

La température de l'ordre de 130°C des spires intérieures ne permet pas le changement d'état du matériau de liaison.

La figure 3 représente partiellement une zone intérieure du bobinage 16 du rotor 14 dont la couche de liaison 32 des spires intérieures n'a pas changée d'état, alors que la couche de liaison des spires situées vers l'extérieur a polymérisé de façon à les lier entre elles.

De plus, tel que décrit précédemment, un tel procédé de fabrication du rotor 12 ne permet pas d'utiliser des roues polaires à demi noyau. Cela diminue le rendement de la machine électrique tournante.

Egalement, lorsque le rotor 12 comporte deux roues polaires 23 et 25 et un noyau 14 séparés, il existe deux faces de contact situées 31, 33 de part et d'autre des faces transversales du noyau 14, créant ainsi deux entrefers parasites préjudiciables au rendement de la machine électrique tournante.

De plus, lors de son fonctionnement, les forces produites par la rotation du rotor 12 ont tendance à provoquer l'écartement axial des roues polaires 23 et 25 et notamment de leurs griffes 26 et 28. Pour limiter ce phénomène il est nécessaire de rigidifier les roues polaires 23, 25.

La rigidification peut être obtenue par l'augmentation des dimensions des roues polaires 23, 25 ce qui augmente le poids du rotor 12 et diminue les performances de la machine électrique tournante

La rigidification peut aussi être obtenue par l'utilisation de roues polaires à demi noyau, ce qui est difficilement envisageable avec le procédé de fabrication utilisé. En effet, les griffes des roues polaires à demi noyau gênent le bobinage de l'élément conducteur 18 sur le noyau 14.

Pour remédier à ces inconvénients l'invention propose que l'enroulement de l'élément conducteur 18 est réalisé sur la paroi cylindrique convexe externe 40 d'un élément tubulaire 42 conformément à la figure 4.

Selon un premier mode de réalisation, le noyau 14 est alors constitué de l'élément tubulaire 42 en forme de tube dont l'épaisseur de la paroi est faible par rapport à son diamètre et d'un corps 44 de noyau dont le diamètre extérieur est sensiblement égal au diamètre intérieur de l'élément tubulaire 42.

L'élément tubulaire 42 peut consister en un tronçon d'une pièce tubulaire, il peut aussi consister en une feuille métallique roulée en tube et soudée.

L'élément tubulaire 42 peut comporter de l'acier. Il peut aussi comporter de l'aluminium et une de ses faces peut être anodisée.

Après l'étape de changement d'état l'élément tubulaire 42 est assemblé sur le corps 44 de noyau.

Ainsi, lors de l'étape de changement d'état, l'élément tubulaire 42 n'est pas assemblé sur le corps 44 de noyau. Par conséquent, la faible épaisseur de sa paroi diminue sa masse et la capacité d'absorption thermique du noyau 14. Cela diminue le transfert et la dispersion de la chaleur et minimise le gradient de température dans le bobinage 16 lors de l'étape de changement d'état du matériau de liaison.

Le procédé selon l'invention permet ainsi de maîtriser l'évolution de la température de bobinage de façon à assurer une liaison optimale des tronçons adjacents de l'élément conducteur 18.

L'assemblage de l'élément tubulaire 42 et du corps 44 du noyau 14, peut être réalisé par collage. De la colle est alors déposée sur une paroi cylindrique 46, 48 de l'élément tubulaire 42 et/ou du corps 44. Le collage peut être réalisé à chaud ou à froid.

L'assemblage de l'élément tubulaire 42 et du corps 44 de noyau peut aussi être réalisé par frettage. Dans ce cas le diamètre de la paroi cylindrique interne 46 de l'élément tubulaire 42 est inférieur au diamètre de paroi cylindrique externe 48 du corps 44. Pour réaliser l'assemblage la température de l'élément tubulaire 42 et/ou du corps 44 est modifiée pour provoquer une variation de dimension.

Par exemple, l'élément tubulaire 42 est chauffé à une température appelée température de frettage pour provoquer sa dilatation de façon que sont diamètre intérieur soit supérieur au diamètre extérieur du corps 44 pour permettent leur emboîtement axial. Le refroidissement de l'élément tubulaire 42 provoque le retour à ses dimensions initiales de façon à réaliser son assemblage avec le corps 44 par serrage radial.

La température de frettage doit être supérieure à la température maximale de fonctionnement de façon à limiter les risques de désassemblage lors du fonctionnement de la machine électrique tournante.

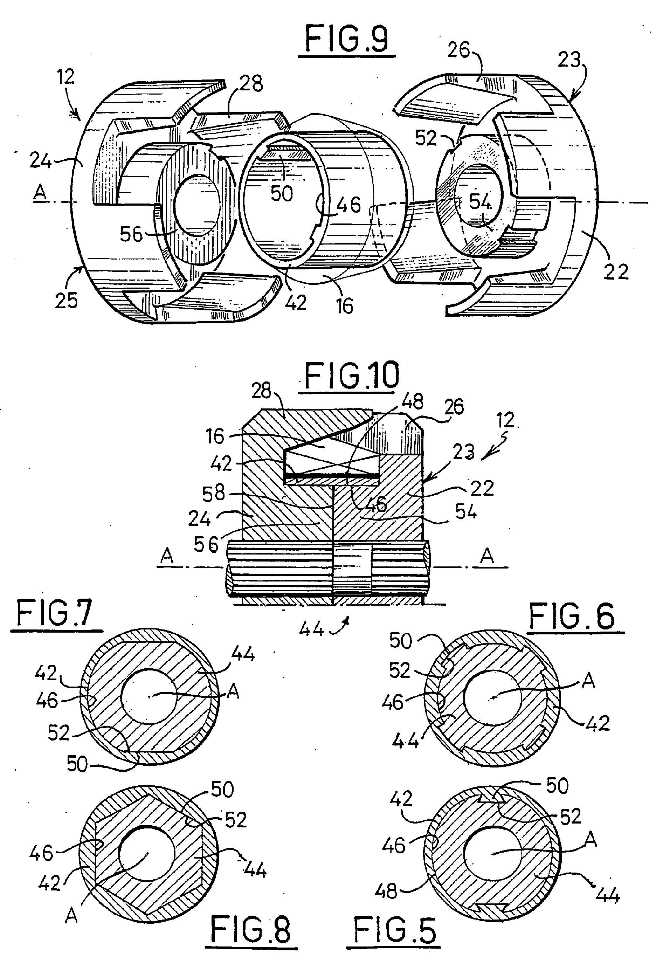

De façon à bloquer la rotation de l'élément tubulaire 42 par rapport au corps 44 de noyau conformément aux figures 5 à 8, la paroi cylindrique interne 46 l'élément tubulaire 42 comporte au moins une forme 50 en creux ou en saillie qui coopère avec une forme 52 en saillie ou en creux complémentaire du corps 44 de noyau.

La figure 5 représente une forme 50 en saillie de la paroi cylindrique interne 46 l'élément tubulaire 42 qui coopère avec une forme 52 en creux complémentaire du corps 44 de noyau. Ici, les formes 50 et 52 sont du type en queue d'aronde.

La figure 6 représente une réalisation inverse de celle représentée à la figure précédente, c'est à dire que la forme 50 est en creux dans la paroi cylindrique interne 46 l'élément tubulaire 42 et coopère avec une forme 52 en saillie complémentaire du corps 44 de noyau.

Conformément aux figures 7 et 8, les formes 50 et 52 de la paroi interne 46 de l'élément tubulaire 42 et du corps 44 de noyau respectivement consistent en des plans qui coopèrent entre eux de façon à bloquer la rotation de l'élément tubulaire 42 par rapport au corps 44 de noyau.

Lorsque l'élément tubulaire 42 est assemblé au corps 44, le noyau 14 massif favorise l'absorption de la chaleur produite par le bobinage 16 lors du fonctionnement de la machine électrique tournante, ce qui optimise son rendement.

Selon un second mode de réalisation représenté aux figures 9 et 10, le corps 44 de noyau est formé en deux parties 54, 56 sensiblement cylindriques qui s'étendent axialement l'une vers l'autre, chacune depuis une face transversale d'une roue polaire 23, 25 du rotor 12. On appelle ainsi les roues polaires 23, 25 roues polaires à demi noyau.

L'assemblage de l'élément tubulaire 42 avec les deux parties 54 et 56 du corps 44 de noyau est réalisé après l'étape de changement d'état de façon similaire au premier mode de réalisation.

Une telle réalisation permet de rigidifier, notamment axialement, les roues polaires 23 et 25 et d'augmenter sa résistance aux contraintes extérieures telles que la vitesse élevée et aux contraintes intérieures telles que les contraintes vibratoires dues aux accélérations et aux décélérations.

Ainsi, il est possible d'augmenter la vitesse de rotation du rotor 12 sans provoquer l'écartement axial des griffes 26 et 28 des roues polaires 23 et 25.

Pour les mêmes raisons, pour une vitesse de rotation constante il est possible d'augmenter le diamètre du rotor 12 par rapport à un rotor réalisé selon l'état de la technique, ce qui augmente les performances de la machine électrique tournante.

De plus, les roues polaires à demi noyau 23, 25 permettent de diminuer les entrefers parasites. En effet, il existe une seule face de contact 58 au lieu de deux, créant ainsi un seul entrefer, conformément à la figure 7. Cela permet notamment de réduire le bruit magnétique et d'augmenter les performances de la machine électrique tournante.

Il est aussi possible d'utiliser des aimants interpolaires qui permettent d'augmenter les performances de la machine électrique tournante.

La description qui précède n'est pas limitative. En effet, l'élément tubulaire 42 peut présenter une forme similaire sans sortir du champ de la protection de l'invention.

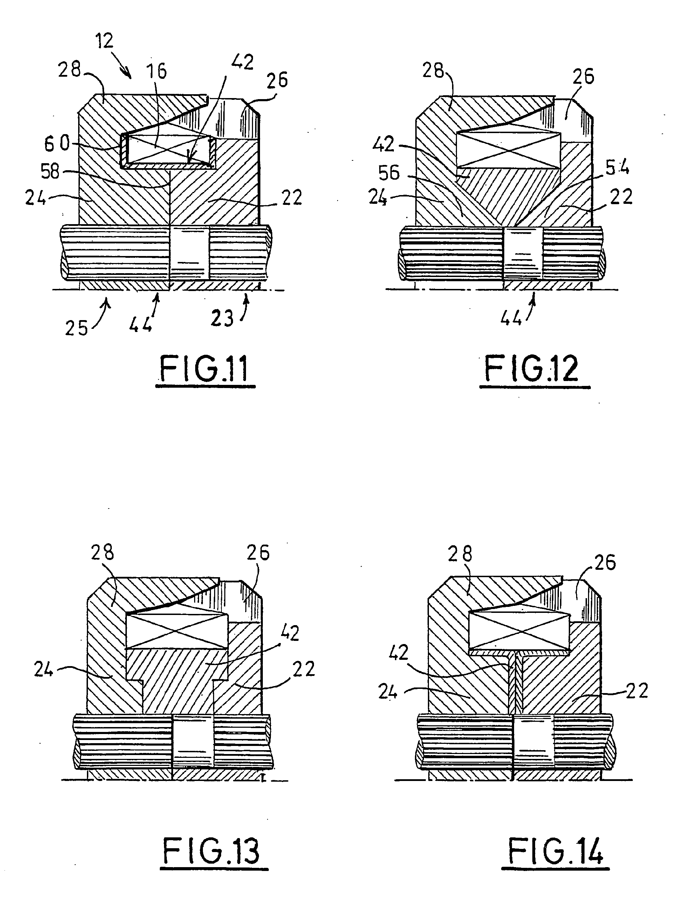

L'élément tubulaire 42 peut présenter deux flancs annulaires 60 qui s'étendent radialement vers l'extérieur du rotor 12, conformément à la figure 11. Ainsi, le bobinage 16 est maintenu axialement par les flancs 60, ce qui permet notamment de faciliter les manipulations de l'enroulement 16. De plus, les flancs 60 peuvent présenter, sur leur bord périphérique extérieur des encoches qui sont destinées à recevoir des saillies des roues polaires 23, 25 en vis-à-vis de façon à empêcher la rotation éventuelle du bobinage et de l'élément tubulaire 42 par rapport au corps 44 de noyau.

Bien entendu, on peut inverser les structures. Les encoches étant alors réalisées dans les roues polaires 23, 25 et les saillies réalisées dans les flancs 60.

Les saillies ou les encoches des roues polaires 23, 25 peuvent appartenir au plateau 22, 24 et/ou aux griffes 26 et 28.

En variantes, un des flancs 60, à savoir celui le plus proche des bagues collectrices, est prolongé à sa périphérie externe par deux pattes axiales pénétrant chacune dans un creux délimité par deux griffes consécutives 26 ou 28. Des guides sont surmoulés sur ces pattes.

Les guides servent à la fixation des fils d'extrémité du bobinage 16 reliés chacun à l'une des bagues collectrices.

L'un de ces guides est visible à la figure 1.

Dans tous les cas des moyens de blocage en rotation interviennent entre au moins l'un des flancs 60 et la roue polaire 23, 25 adjacente à ce flanc 60.

Selon une variante représentée à la figure 12, l'élément tubulaire 42 peut présenter une section axiale triangulaire qui est complémentaire des deux parties 54 et 56 du corps 44 qui sont alors tronconiques. L'inclinaison des interfaces entre l'élément tubulaire 42 et les deux parties 54 et 56 peut réduire les pertes dues aux entrefers parasites.

Selon d'autres variantes, l'élément tubulaire 42 peut présenter une section axiale en forme de T. L'élément tubulaire 42 est alors par exemple réalisé dans la masse par forgeage ou par usinage, ou par formage à partir d'un tube, conformément aux figures 13 à 14 respectivement.

Bien entendu la machine électrique tournante peut être réversible et travailler en mode alternateur et en mode démarreur comme décrit dans le document WO01/69762.

Il est possible dans ce cas, du fait de la présence de roues polaires à demi noyau, de prévoir des aimants permanents entre les griffes pour augmenter la puissance de la machine.

Dans tous les cas les griffes sont moins sensibles à l'action de la force centrifuge et s'écarte moins sous l'action de celle-ci du fait de la présence des demi noyaux.

## Revendications

1. Procédé de fabrication d'un rotor (12) de machine électrique tournante qui comporte un noyau (14) sur lequel est réalisé au moins un bobinage électrique (16) comprenant au moins un élément conducteur électrique (18) qui est enroulé de façon à former le bobinage (16), qui est revêtu d'au moins une couche (30) en matériau isolant électrique, et qui est enrobé d'une couche externe de liaison (32) qui comporte un matériau de liaison qui permet de lier entre eux des tronçons adjacents de l'élément conducteur (18) enrobé, du type dont l'étape d'enroulement est suivie d'une étape de changement d'état comportant une étape de chauffage, notamment par chauffage par effet Joule, d'un élément conducteur (18), qui provoque le ramollissement ou la fusion du matériau de liaison pour qu'il remplisse au moins partiellement les interstices existants entre les tronçons adjacents de l'élément conducteur (18) enroulé, puis, une étape de refroidissement, qui provoque à nouveau sa solidification pour lier entre eux les tronçons adjacents de l'élément conducteur (18) enroulé, et du type dans lequel l'enroulement de l'élément conducteur (18) est réalisé sur la paroi cylindrique convexe externe (40) d'un élément tubulaire (42) du noyau (14), et dans lequel après ladite étape de changement d'état l'élément tubulaire (42) est assemblé sur un corps (44) de noyau (14), de façon à minimiser le gradient de température dans le bobinage (16) lors de l'étape de changement d'état.

2. Procédé de fabrication d'un rotor (12) de machine électrique tournante selon la revendication précédente, **caractérisé en ce que** l'assemblage de l'élément tubulaire (42) et du corps (44) de noyau est réalisé par frettage.

3. Procédé de fabrication d'un rotor (12) de machine électrique tournante selon la revendication 1, **caractérisé en ce que** l'assemblage de l'élément tubulaire (42) et du corps (44) du noyau est réalisé par collage.

4. Rotor de machine électrique tournante obtenu selon le procédé selon l'une quelconque des revendications 1 à 4, **caractérisé en ce que** le noyau (14) comporte un élément tubulaire (42) externe sur la paroi cylindrique convexe externe (40) duquel est réalisé le bobinage (16).

5. Rotor de machine électrique tournante selon la revendication précédente, **caractérisé en ce que** la paroi cylindrique concave interne (46) de l'élément tubulaire (42) comporte au moins une forme (50) en creux ou en saillie qui coopère avec une forme (52) en saillie ou en creux complémentaire du corps (44) de noyau de façon à bloquer la rotation de l'élément tubulaire (42) par rapport au corps (44) de noyau.

6. Rotor de machine électrique tournante selon la revendication 4 ou 5, **caractérisé en ce que** l'élément tubulaire (42) consiste en une feuille métallique roulée en tube et soudée.

7. Rotor de machine électrique tournante selon l'une quelconque des revendications 4 à 6, **caractérisé en ce qu'**il consiste en un rotor à griffes comportant deux roues polaires (23, 25) et **en ce que** le corps (44) de noyau (14) est formé en deux parties (54, 56) sensiblement cylindriques qui s'étendent axialement l'une vers l'autre, chacune depuis une face transversale d'une roue polaire (23, 25) du rotor (12).

8. Rotor de machine électrique tournante selon l'une quelconque des revendications la revendication 4 à 7, **caractérisé en ce que** l'élément tubulaire (42) comporte de l'acier.

9. Rotor de machine électrique tournante selon l'une quelconque des revendications 4 à 8, **caractérisé en ce que** l'élément tubulaire (42) comporte de l'aluminium.

10. Rotor de machine électrique tournante selon l'une quelconque des revendications 4 à 9, **caractérisé en ce qu'**au moins une face de l'élément tubulaire (42) est anodisée.

11. Rotor de machine électrique tournante selon l'une quelconque des revendications 4 à 10, **caractérisé en ce qu'**un élément isolant électrique (34) est interposé axialement entre le bobinage (16) et la paroi cylindrique convexe externe (40) de l'élément tubulaire (42) du noyau et assure la tenue mécanique du bobinage (16) et de l'élément tubulaire (42).

12. Rotor de machine électrique tournante l'une quelconque des revendications 4 à il, **caractérisé en ce que** le matériau de liaison de la couche externe de liaison (32) est un polymère du type thermodurcissable.

13. Rotor de machine électrique tournante selon l'une quelconque des revendications 4 à 11, **caractérisé en ce que** le matériau de liaison de la couche externe de liaison (32) est un polymère du type thermoplastique.

## Claims

1. Method for manufacturing a rotor (12) of a rotating electric machine which comprises a core (14) on which is produced at least one electric winding (16) comprising at least one electrically conductive element (18) which is wound so as to form the winding (16), which is coated with at least one layer (30) of an electrically insulating material, and which is coated with an external bond layer (32) which comprises a bond material which makes it possible to bind together adjacent sections of the coated conductive element (18), of the type in which the winding step is followed by a state change step comprising a step for heating, notably by heating by Joule's effect, a conductive element (18), which causes the bond material to soften or melt so that it at least partially fills the interstices that exist between the adjacent sections of the wound conductive element (18), then, a cooling step, which causes its resolidification to bind together the adjacent sections of the wound conductive element (18), and of the type in which the winding of the conductive element (18) is done on the external convex cylindrical wall (40) of a tubular element (42) of the core (14), and in which, after said state change step, the tubular element (42) is joined to a body (44) of the core (14), so as to minimize the temperature gradient in the winding (16) during the state change step.

2. Method for manufacturing a rotor (12) of a rotating electric machine according to the preceding claim, **characterized in that** the joining of the tubular element (42) and of the body (44) of the core is performed by banding.

3. Method for manufacturing a rotor (12) of a rotating electric machine according to Claim 1, **characterized in that** the joining of the tubular element (42) and the body (44) of the core is performed by gluing.

4. Rotating electric machine rotor obtained according to the method according to any one of Claims 1 to 3, **characterized in that** the core (14) comprises an external tubular element (42) on the external convex cylindrical wall (40) from which is produced the winding (16).

5. Rotating electric machine rotor according to the preceding claim, **characterized in that** the internal concave cylindrical wall (46) of the tubular element (42) comprises at least one hollowed-out or protruding shape (50) which cooperates with a complementary protruding or hollowed-out shape (52) of the body (44) of the core so as to block the rotation of the tubular element (42) relative to the body (44) of the core.

6. Rotating electric machine rotor according to Claim 4 or 5, **characterized in that** the tubular element (42) consists of a metal sheet rolled into a tube and welded.

7. Rotating electric machine rotor according to any one of Claims 4 to 6, **characterized in that** it consists of a claw rotor comprising two polar wheels (23, 25) and **in that** the body (44) of the core (14) is formed in two substantially cylindrical parts (54, 56) which extend axially relative to one another, each from a transversal face of a polar wheel (23, 25) of the rotor (12).

8. Rotating electric machine rotor according to any one of Claims 4 to 7, **characterized in that** the tubular element (42) is made of steel.

9. Rotating electric machine rotor according to any one of Claims 4 to 8, **characterized in that** the tubular element (42) is made of aluminium.

10. Rotating electric machine rotor according to any one of Claims 4 to 9, **characterized in that** at least one face of the tubular element (42) is anodized.

11. Rotating electric machine rotor according to any one of Claims 4 to 10, **characterized in that** an electrically insulating element (34) is interposed axially between the winding (16) and the external convex cylindrical wall (40) of the tubular element (42) of the core and ensures the mechanical strength of the winding (16) and of the tubular element (42).

12. Rotating electric machine rotor according to any one of Claims 4 to 11, **characterized in that** the binding material of the external binding layer (32) is a polymer of the thermosetting type.

13. Rotating electric machine rotor according to any one of Claims 4 to 11, **characterized in that** the binding material of the external binding layer (32) is a polymer of the thermoplastic type.

## Patentansprüche

1. Verfahren zur Herstellung eines Läufers (12) einer drehenden elektrischen Maschine, der einen Kern (14) umfasst, auf dem mindestens eine elektrische Wicklung (16) hergestellt ist, die mindestens ein elektrisch leitendes Element (18) aufweist, das so gewickelt ist, dass es die Wicklung (16) bildet, welche mit mindestens einer Schicht (30) aus einem elektrisch isolierenden Material überzogen ist und die mit einer äußeren Verbindungsschicht (32) beschichtet ist, welche ein Verbindungsmaterial umfasst, das es gestattet, benachbarten Abschnitte des umhüllten leitenden Elements (18) miteinander zu verbinden, jener Art, bei der sich an den Wicklungsschritt ein Zustandsänderungsschritt anschließt, der einen Schritt der Erwärmung, insbesondere durch einen Joule-Effekt, eines leitenden Elements (18), der das Erweichen oder das Schmelzen des Verbindungsmaterials bewirkt, damit dieses die zwischen den benachbarten Abschnitten des gewickelten leitenden Elements (18) bestehenden Zwischenräume zumindest teilweise füllt, dann einen Schritt des Abkühlens, der eine erneute Erstarrung zum Miteinanderverbinden der benachbarten Abschnitte des gewickelten leitenden Elements (18) bewirkt, umfasst, und jener Art, bei der das Wickeln des leitenden Elements (18) auf der zylindrischen, konvexen Außenwand (40) eines röhrenförmigen Elements (42) des Kerns (14) erfolgt, und bei der nach dem Zustandsänderungsschritt das röhrenförmige Element (42) auf einem Körper (44) des Kerns (14) angebracht wird, um den Temperaturgradienten in der Wicklung (16) bei dem Zustandsänderungsschritt zu minimieren.

2. Verfahren zur Herstellung eines Läufers (12) einer drehenden elektrischen Maschine nach dem vorhergehenden Anspruch, **dadurch gekennzeichnet, dass** das Zusammenfügen des röhrenförmigen Elements (42) und des Körpers (44) des Kerns durch Aufschrumpfen erfolgt.

3. Verfahren zur Herstellung eines Läufers (12) einer drehenden elektrischen Maschine nach Anspruch 1, **dadurch gekennzeichnet, dass** das Zusammenfügen des röhrenförmigen Elements (42) und des Körpers (44) des Kerns durch Verkleben erfolgt.

4. Nach dem Verfahren nach einem der Ansprüche 1 bis 3 erhaltener Läufer für eine drehende elektrische Maschine, **dadurch gekennzeichnet, dass** der Kern (14) ein äußeres röhrenförmiges Element (42) aufweist, auf dessen zylindrischer, konvexer Außenwand (40) die Wicklung (16) hergestellt wird.

5. Läufer für eine drehende elektrische Maschine nach dem vorhergehenden Anspruch, **dadurch gekennzeichnet, dass** die zylindrische, konkave Innenwand (46) des röhrenförmigen Elements (42) mindestens eine vertiefte oder vorragende Form (50) aufweist, die mit einer vorragenden oder vertieften komplementären Form (52) des Körpers (44) des Kerns zusammenwirkt, um die Drehung des röhrenförmigen Elements (42) bezüglich des Körpers (44) des Kerns zu sperren.

6. Läufer für eine drehende elektrische Maschine nach Anspruch 4 oder 5, **dadurch gekennzeichnet, dass** das röhrenförmige Element (42) aus einer zu einem Rohr zusammengerollten und verschweißten Metallfolie besteht.

7. Läufer für eine drehende elektrische Maschine nach einem der Ansprüche 4 bis 6, **dadurch gekennzeichnet, dass** er aus einem Klauenpolläufer besteht, der zwei Polräder (23, 25) aufweist, und dass der Körper (44) des Kerns (14) aus zwei im Wesentlichen zylindrischen Teilen (54, 56) gebildet wird, die sich jeweils von einer Querfläche eines Polrads (23, 25) des Läufers (12) axial zueinander erstrecken.

8. Läufer für eine drehende elektrische Maschine nach einem der Ansprüche 4 bis 7, **dadurch gekennzeichnet, dass** das röhrenförmige Element (42) aus Stahl besteht.

9. Läufer für eine drehende elektrische Maschine nach einem der Ansprüche 4 bis 8, **dadurch gekennzeichnet, dass** das röhrenförmige Element (42) aus Aluminium besteht.

10. Läufer für eine drehende elektrische Maschine nach einem der Ansprüche 4 bis 9, **dadurch gekennzeichnet, dass** mindestens eine Fläche des röhrenförmigen Elements (42) anodisiert ist.

11. Läufer für eine drehende elektrische Maschine nach einem der Ansprüche 4 bis 10, **dadurch gekennzeichnet, dass** ein elektrisch isolierendes Element (34) axial zwischen der Wicklung (16) und der zylindrischen, konvexen Außenwand (40) des röhrenförmigen Elements (42) des Kerns angeordnet ist und die mechanische Festigkeit der Wicklung (16) und des röhrenförmigen Elements (42) gewährleistet.

12. Läufer für eine drehende elektrische Maschine nach einem der Ansprüche 4 bis 11, **dadurch gekennzeichnet, dass** das Verbindungsmaterial der äußeren Verbindungsschicht (32) ein Polymer wärmehärtender Art ist.

13. Läufer für eine drehende elektrische Maschine nach einem der Ansprüche 4 bis 11, **dadurch gekennzeichnet, dass** das Verbindungsmaterial der äußeren Verbindungsschicht (32) ein Polymer thermoplastischer Art ist.
